# EUROPEAN PATENT SPECIFICATION

(11) **EP 1 749 357 B1**
(45) Date of publication and mention of the grant of the patent: **22.04.2009**
(21) Application number: 05746485.1
(22) Date of filing: 24.05.2005
(51) Int. Cl.: H04B 10/155

(54) **METHOD AND APPARATUS FOR PRODUCING HIGH EXTINCTION RATIO DATA MODULATION FORMATS**
VERFAHREN UND VORRICHTUNG ZUM ERSTELLEN VON DATENMODULATIONSFORMATEN MIT HOHEM EXTINKTIONSVERHÄLTNIS
PROCEDE ET APPAREIL POUR PRODUIRE DES FORMATS DE MODULATION DE DONNEES A RAPPORT D'ATTENUATION ELEVE

(30) Priority: 25.05.2004 GB 0411684; 10.01.2005 GB 0500398
(43) Date of publication of application: 07.02.2007
(73) Proprietor: Azea Networks Limited, Essex RM3 0SD (GB)
(72) Inventor: OBERLAND, Richard, Harold Wood Romford Essex RM3 0SD (GB)
(74) Representative: Finnie, Peter John
(86) International application number: PCT/GB2005/002049
(87) International publication number: WO 2005/117305

(56) References cited:
- EP-A- 0 565 035
- EP-A- 0 825 733
- US-A1- 2002 101 639
- US-B1- 6 522 438
- GRIFFIN R ET AL OPTICAL SOCIETY OF AMERICA / INSTITUTE OF ELECTRICAL AND ELECTRONICS ENGINEERS: "Integrated DQPSK transmitter for dispersion-tolerant and dispersion-managed DWDM transmission" OPTICAL FIBER COMMUNICATION CONFERENCE. (OFC). POSTCONFERENCE DIGEST. ATLANTA, GA, MARCH 23 - 28, 2003, TRENDS IN OPTICS AND PHOTONICS SERIES. (TOPS), WASHINGTON, DC : OSA, US, vol. TOPS. VOL. 86, 23 March 2003 (2003-03-23), pages 770-771, XP010680490 ISBN: 1-55752-746-6

## Description

### Field of the Invention

The invention relates to optical data formats for optical data transmission, and in particular to data formats with a high extinction ratio.

### Background to the Invention

Optical data transmission is widely used for long haul, short haul, and metro network based systems. Typically, optical data is provided by electrically modulating light from a coherent light source, using an electro-optic modulator. High performance electro-optic modulators are usually based on a Mach-Zehnder (MZ) interferometer structure.

Most long distance networks are impaired by the loss of the optical transmission fibre. The loss is usually overcome by the use of optical amplifiers. These amplifiers provide signal gain but also produce optical noise known as Amplified Spontaneous Emission (ASE). The optical noise mixes with the optical signal at the receiver photodiode, producing electrical beat noise. This noise usually dominates the receiver's Optical Signal to Noise Ratio (OSNR) versus Bit Error Ratio (BER) performance. The OSNR performance can be improved by reducing the beat noise on the '0' level bits by reducing the light level sent on '0' bits.

The transmitter performance is determined by the ratio of optical power in the '1's to the optical power in the '0's and is called extinction ratio. A high extinction ratio signal is achieved by driving the modulator such that the '0' power level is minimised. However light in the '0's is unavoidable due to the noisy electrical drive signal being converted into optical noise at the modulation stage.

One might expect the extinction ratio of the data signals to be significantly improved by connecting multiple modulators in series and applying in time the same modulation signal to each modulator. When using MZ modulators in the usual way, the noise on electrical drive signals is converted in a linear manner with random 180 degree phase discontinuities on the '0' light level. When applied to subsequent MZ modulators the discontinuities cause both constructive and deconstructive interference to occur leading to a smaller improvement in extinction ratio than expected.

The aim of the present invention is to provide a system and method for producing optical data signals with an improved extinction ratio over existing data formats.

A prior art systems is known from EP 0 825 733.

### Summary of the Invention

According to a first aspect of the present invention, a method of optically encoding binary data, comprises the steps of:
splitting light from a coherent light source into first and second light signals;
modulating the first light signal with the binary data using a first optical intensity modulator;
modulating the second light signal with the binary data using a second optical intensity modulator; and,
coupling the light output from the first and second optical intensity modulators to obtain a combined optical output,
wherein the first and second optical intensity modulators are driven at points of maximum optical transmission,
and wherein the output of one of the first and second optical modulators is phase biased to be either in phase or in anti-phase with the output of the other of the first and second optical modulators, such that the combined optical output gives rise to a maximum optical extinction ratio.

The optical modulation method of the present invention gives rise to a data format with a high extinction ratio compared with conventional optical data formats. The combination of the electric field transfer function of each of the modulators and the power transfer function of the modulator superstructure means that the zero power level is compressed, mitigating the effect of noise in the electrical data signals. A further advantage of the present invention is that it may be used to obtain a wide variety of optical data modulation formats.

Preferably, the first and second modulators are electro-optic modulators. More preferably, they are Mach-Zehnder modulators.

Preferably, the optical modulators are driven with RZ data. Electrical RZ drivers typically give rise to less noise than electrical NRZ drivers. Nevertheless, the optical modulators may also be driven with NRZ data.

Preferably, a delay is applied to the data driving one of the first and second optical modulators. More preferable, the magnitude of this delay is any one of: 0 bits: 1 bit; or, any value between 0 bits and 1 bit. The ability to apply such a delay allows a the selection of a variety different data modulation formats.

In some embodiments of the present invention, the logical polarity of the data driving one of the first and second modulators is inverted. This feature allows the selection of further data modulation formats.

According to a second aspect of the present invention, an optical transmitter for transmitting optically encoded data comprising a coherent light source and a modulator structure, the modulator structure including:
an optical splitter coupled to the coherent light source for splitting light from the coherent light source into first and second light signals;
a first optical intensity modulator for modulating the first light signal with binary data;
a second optical intensity modulator for modulating the second light signal with binary data;
means for phase biasing the output of one of the first and optical modulators to be either in phase or in anti-phase with the output of the other of the first and second optical modulators, such that the combined optical output gives rise to a maximum optical extinction ratio; and,
a coupler for coupling the output from the first optical intensity modulator and the output from the second optical intensity modulator,
wherein the first and second optical intensity modulators are adapted to be driven at points of maximum optical transmission.

Preferably, the transmitter is integrated onto a single substrate. Alternatively, it may be in the form of a plurality of discrete components. It is preferred to use a single substrate so as to eliminate variations in temperature and stress sensitivity between elements of the transmitter.

Preferably, the transmitter further includes electrical RZ drivers connected to each of the first and second optical modulators. Alternatively, the transmitter may include electrical NRZ drivers connected to each of the first and second optical modulators.

### Brief Description of the Drawings

Examples of the present invention will now be described in detail with reference to accompanying drawings, in which:
Figure 1 illustrates the electrical field function and corresponding optical power transfer function versus drive voltage for a typical x-cut zero-chirp Lithium Niobate Mach Zehnder modulator;
Figure 2 illustrates the optical modulator structure of a transmitter in accordance with the present invention;
Figure 3 illustrates the electrical field function and corresponding optical power transfer function versus vector sum of the combining fields for the optical modulator structure of Figure 2;
Figure 4 illustrates the drive and bias conditions for the inner modulators in accordance with one example of the invention;
Figure 5 shows the pulse shape of a phase encoded duo-binary optical signal generated in accordance with the present invention.
Figure 6 is a table indicating the conditions under which a number of different modulation formats are obtainable using an optical modulator in accordance with the present invention;
Figure 7 illustrates possible drive signals and the resulting modulator output to obtain a duobinary RZ modulation format; and,
Figure 8 illustrates schematically a transmitter architecture in accordance with the present invention.

### Detailed Description

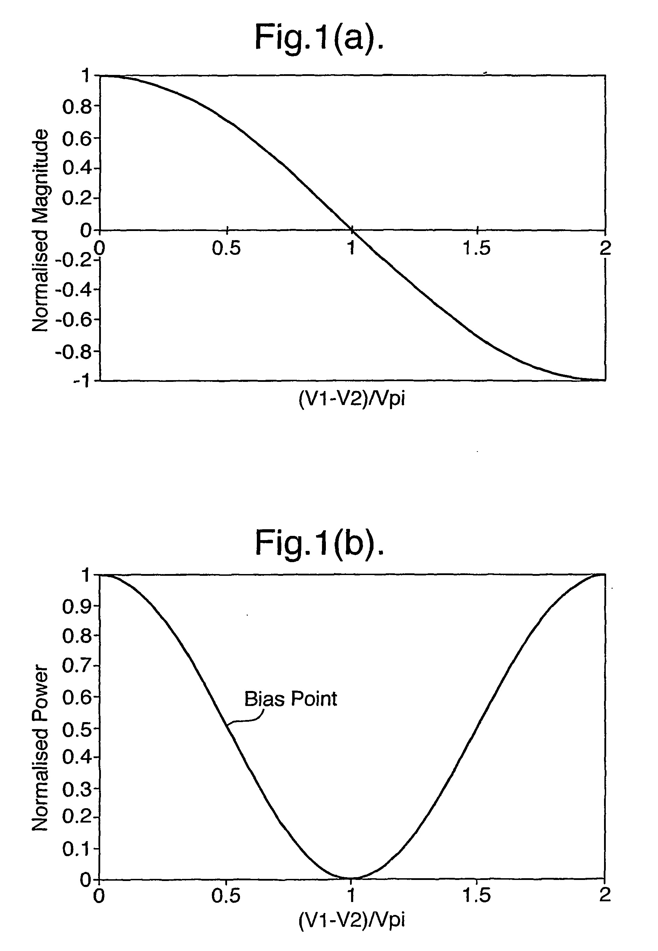

Figure 1 a illustrates the electrical field transfer function of a typical x-cut zero-chirp Lithium Niobate Mach-Zehnder (MZ) modulator. The applied voltage is shown on the x-axis as a normalised difference between the voltage applied to the two arms of the modulator, and the resultant electrical field output is shown as a normalised value on the y-axis. The x-axis is divided into units of V1-V2/Vpi, where V1 is the voltage applied to a first arm of the modulator, V2 is the voltage applied to the other arm of the modulator and Vpi is the voltage difference between V1 and V2 required to give rise to a phase shift of 180° i.e. destructive interference at the output and hence zero electric field. The units of the y-axis are normalised by the maximum electric field at the output.

Figure 1b shows the power transfer function corresponding to the square of the electrical field transfer function of Figure 1 a. The typical constant bias point about which the modulator is driven is indicated in Figure 1b. The bias point is the half power point or quadrature point.

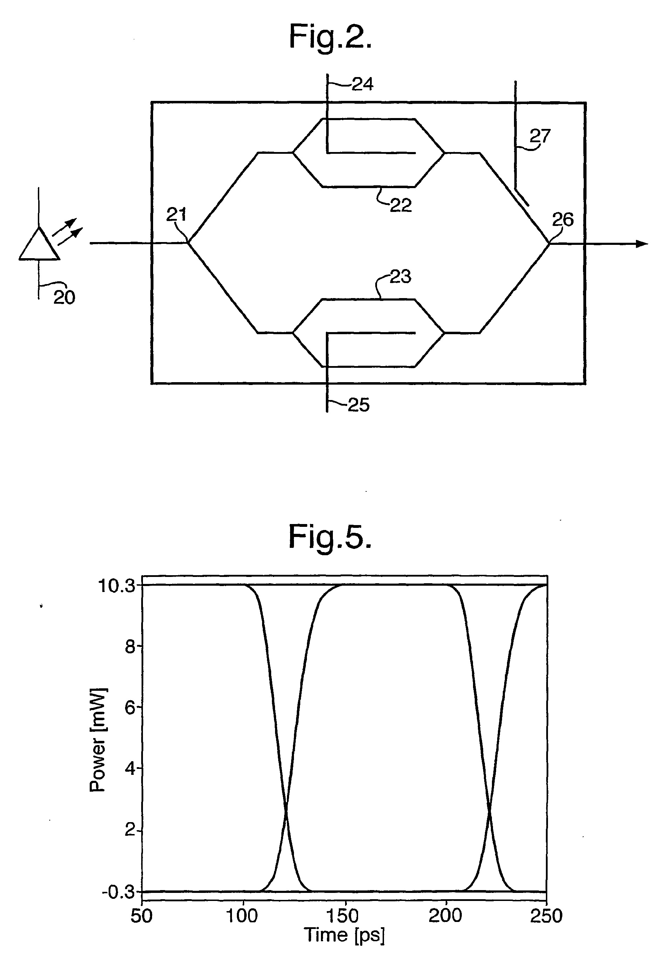

The present invention uses an MZ super-structure as shown in Figure 2. The MZ super-structure comprises two MZ modulators connected in parallel. The input of the MZ super-structure comprises a Y splitter. Coupled to each output of the Y splitter is an MZ modulator. The outputs of the MZ modulators are coupled together at a super-structure output. One arm of the super-structure output may be DC biased to change the phase of the light.

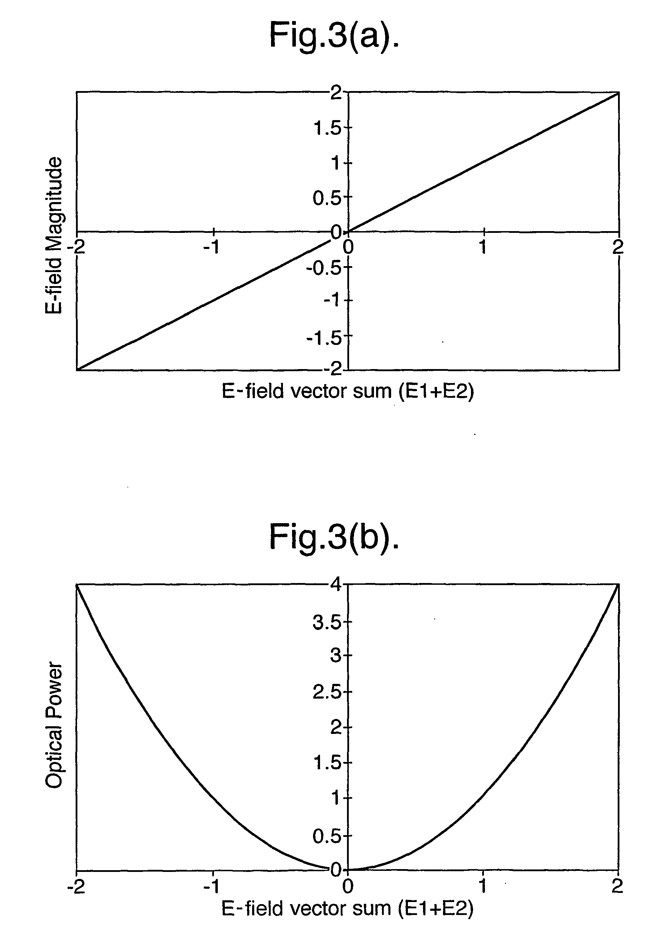

The optical electric field transfer function for the super-structure is shown in Figure 3a as the magnitude of the electric field versus the vector sum of the electric field from each of the MZ modulators. The corresponding optical power transfer function is shown in Figure 3b. The optical power transfer function of the MZ super-structure is a parabola.

Each of the modulators has the electric field transfer function shown in Figure 1a with field compression occurring at the corresponding maximum power points. This, coupled with the parabolic power transfer function of the superstructure means that around the '0' output power level, the total transfer function is compressed as compared with a single MZ modulator i.e. a change in the applied voltage leads to a relatively small change in optical output power.

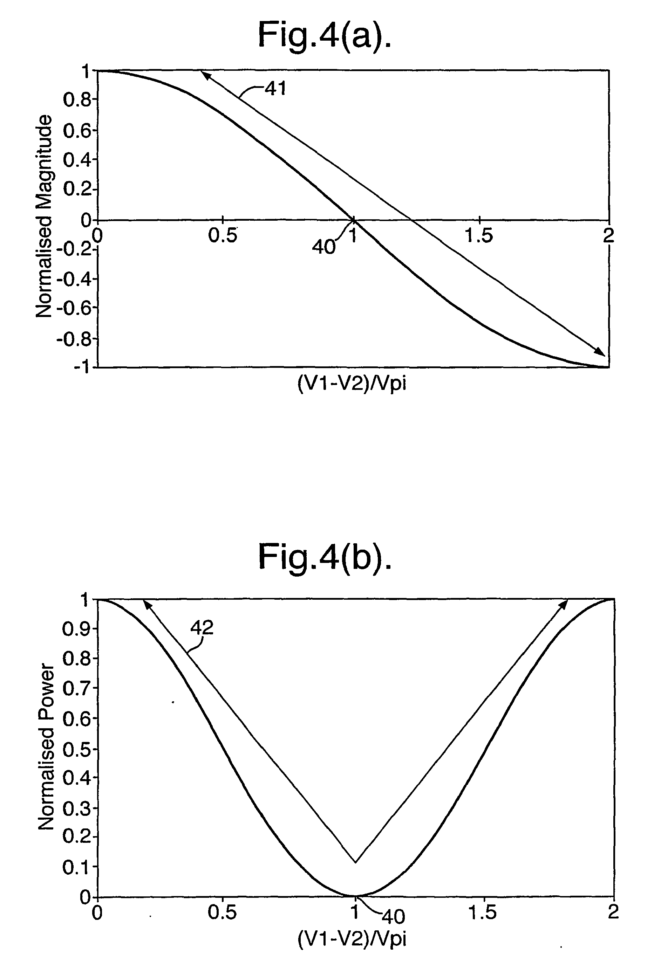

By driving one or both of the inner modulators with a 2Vpi peak-to-peak signal about the null point, the shape of the optical pulses produced by the superstructure are modified as compared to conventional optical data pulses. The drive and bias conditions are illustrated in Figure 4. Figure 4a shows the electrical field transfer function as in Figure 1a and Figure 4b the power transfer function of the inner modulators. The null point 40 is indicated as the point of zero electrical field or optical power and the extent of the drive signals is indicated by the arrows 41 and 42. The pulses have a low crossover point indicating '0' level compression, as shown in the eye diagram of Figure 5. Electrical noise at points where there should be zero optical power output is compressed. This produces signals with a higher extinction ratio and hence a better receiver optical OSNR performance, highly desirable in optical data transmission.

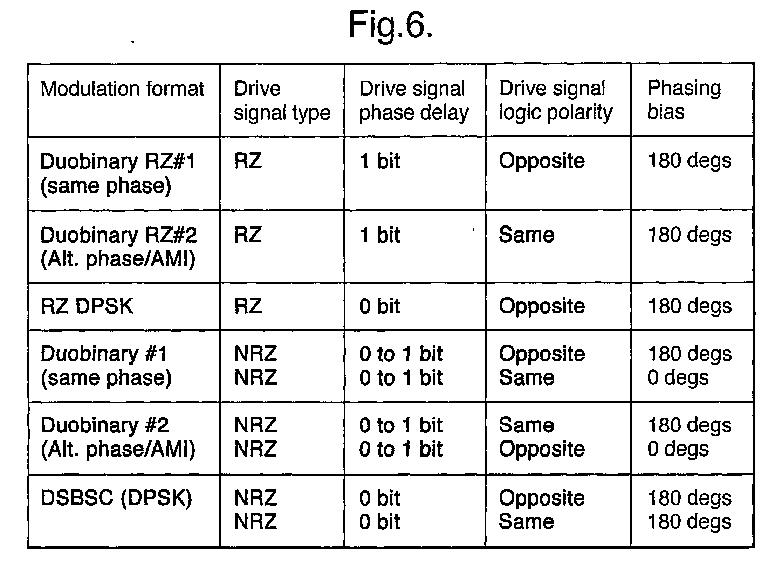

-Driving both MZs in a superstructure as shown in Figure 2 with 2Vpi about the null point can produce a number of different modulation data formats as shown in Figure 6. In particular, the present invention provides effective means for producing duobinary data formats. These have narrower spectral widths than binary data and are increasingly being used in wavelength division multiplexed (WDM) data transmission.

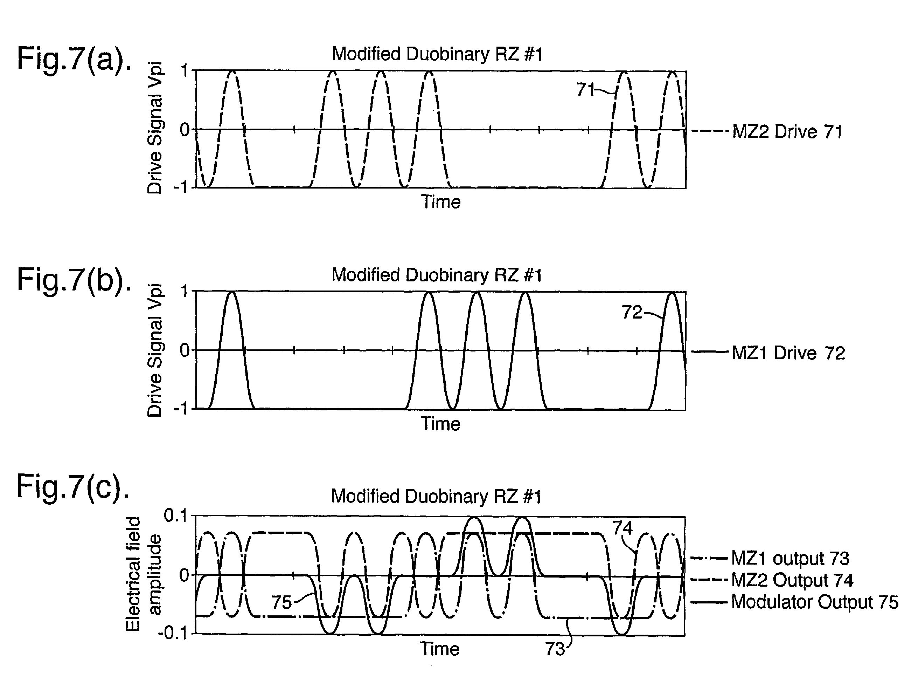

Figure 7 shows a particular example of a duobinary format (labelled as duobinary RZ#1 in Figure 6). A first drive signal 71 is applied to the first and MZ and has opposite logical polarity to a second drive signal 72 applied to the second MZ, the logical polarity of the second drive signal 72 having been inverted. Furthermore, the second drive signal 72 is delayed by 1 bit relative to the first drive signal 71. The outputs (73 and 74) of the two MZs are shown in Figure 7c along with the resulting combined modulator output 75. As can be seen in Figure 7c, the output 74 of the second MZ is phase inverted. This is as a result of setting the phasing bias to 180°. In this way the logical '0's of the modulator output are obtained through the combination of equal and opposite resulting electric field amplitudes from each MZ, and not through a zero amplitude output from either MZ (as is typical of the prior art). This is possible since the modulators are driven 2Vpi around the null point rather than 1Vpi with the null point at an extreme. As described above, combining the two MZ outputs leads to compression of the '0' output power level and therefore an improved extinction ratio. The improvement in OSNR performance due to the present invention when using RZ data is of the order of 0.5 dB/nm relative to typical prior art devices.

In this case the duobinary format has a constant phase between '1' bits not divided by a '0'. If the drive signal logic polarity is the same for each modulator then it is possible to create a modified duobinary format (labelled 'Duobinary RZ#2' in Figure 6) where there is an alternate phase between each '1' bit. This is known as Alternate Mark Inversion (AMI).

Duobinary optical data can also be obtained using NRZ drive signals. As shown in Figure 6, a delay of up to one bit may be used between the data applied to each modulator and the same or opposite polarity data can be used for each modulator.

All On-Off-Keyed (OOK) formats benefit from the cascaded MZ transfer functions and offer high extinction ratios. It is possible to generate Phase-Shift-Keyed (PSK) formats with this method and apparatus. The ability to select a wide range of modulation formats is very useful from a system perspective.

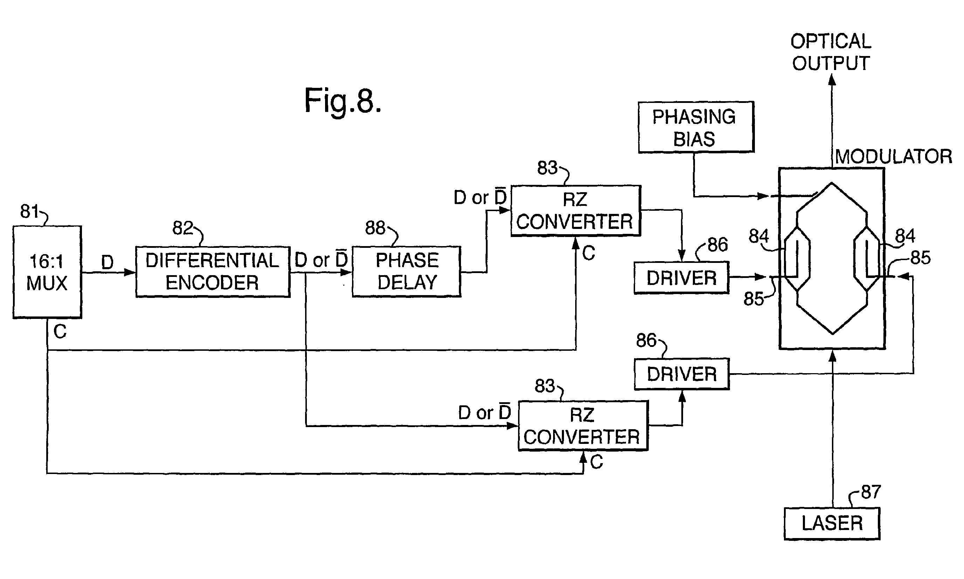

Figure 8 shows an example of a transmitter architecture in accordance with the present invention. Synchronous electrical data and clock is provided from a 16:1 multiplexer chip that interfaces from SDH or Forward Error Correction (FEC) circuitry 81. The data is differentially encoded by differential encoder 82-require for duo-binary formats. The output data polarity can be of either sense depending on the format required, labelled as data or data bar. The data or inverted logic data is converted to an RZ form using the RZ converters 83. The RZ converters are high-speed logical AND gates, requiring synchronous data and clock inputs. Suitable chip based differential encoders and RZ converters are available from Inphi Corporation. An optical modulator superstructure is as shown in Figure 2, with MZ modulators 84 connected in parallel, each having an electrode 85 driven by an RZ driver 86. A suitable modulator structure is available from Sumitomo Osaka Cement and is their SSB modulator. The optical modulator superstructure is shown coupled to a laser light source 87. The transmitter shown is set up to use RZ drivers. Suitable RZ drivers are available from LA techniques. NRZ data and drivers may be used and the need for RZ converters is then eliminated, however, RZ data is generally preferred as RZ drivers have superior performance to NRZ drivers. The electrical data applied to one electrode may be delayed relative to the other using a phase delay means 88, such as is available from Iterra Communications. The phase delay typically provides a 0 or 1 bit data delay between the RZ data streams. For NRZ data the delay can be up to 1 bit and determines for optical pulse width.

As shown, a DC phasing bias may be applied to the output of one of the modulators in the optical modulator structure. This phasing bias provides a constant phase shift to the light in one arm. The phase shift is chosen to be 0 or 180° relative to the other arm and dependent on the data format required. The two combining arms then interfere either in phase or in anti-phase.

As described above, the data logic applied to one modulator may be the same as or inverted relative to the data applied to the other modulator. Using a delay and/or different data for each arm leads to different output optical data formats which may be selected to suit a particular application. Applying data to one arm and a constant bias to the other leads to other high extinction ratio formats.

## Claims

1. A method of optically encoding binary data, comprising the steps of:
splitting light from a coherent light source into first and second light signals;
modulating the first light signal with the binary data using a first optical intensity modulator;
modulating the second light signal with the binary data using a second optical intensity modulator; and,
coupling the light output from the first and second optical intensity modulators to obtain a combined optical output,
wherein the first and second optical intensity modulators are driven at points of maximum optical transmission,
and wherein the output of one of the first and second optical modulators is phase biased to be either in phase or in anti-phase with the output of the other of the first and second optical modulators, such that the combined optical output gives rise to a maximum optical extinction ratio.

2. A method according to any preceding claim, wherein the first and second modulators are electro-optic modulators.

3. A method according to claim 2, wherein the first and second modulators are Mach-Zehnder modulators.

4. A method according to any preceding claim, wherein the first and second optical modulators are driven with RZ or NRZ data.

5. A method according to any preceding claim, wherein a delay is applied to data driving one of the first and second optical modulators.

6. A method according to claim 5, wherein the magnitude of the delay applied to one of the first and second modulators is any one of: 0 bits; 1 bit; or, any value between 0 and 1 bits.

7. A method according to any preceding claim, wherein the logical polarity of the data driving one of the first and second modulators is inverted

8. A method according to claim 7, comprising the steps of:
driving the first and second optical modulators with RZ data;
applying a delay of 1 bit to the data driving one of the first and second optical modulators; and,
phase biasing the output of one of the first and second optical modulators to be in anti-phase with the other of the first and second light signals,
wherein the combined optical output is a duobinary RZ format in which consecutive logical "1"s have the same phase.

9. A method according to claim 6, comprising the steps of:
driving the first and second optical modulators by RZ data;
applying a delay of 1 bit to the data driving one of the first and second optical modulators; and,
phase biasing the output of one of the first and second optical modulators to be in anti-phase with the other of the first and second light signals,
wherein the combined optical output is a duobinary RZ format in which consecutive logical "1"s have opposite phase.

10. A method according to claim 7, comprising the steps of:
driving the first and second optical modulators by RZ data;
applying no delay to the data driving either the first and second optical modulators; and,
phase biasing the output of one of the first and second optical modulators to be in anti-phase with the other of the first and second light signals,
wherein the combined optical output is a differentially phase-shift keyed format.

11. A method according to claim 6 or claim 7, comprising the steps of:
driving the first and second optical modulators by NRZ data;
applying a delay of between 0 bits and 1 bit to the data driving one of the first and second optical modulators; and,
phase biasing the output of one of the first and second optical modulators to be either in anti-phase with the other of the first and second light signals if the logical polarity of the data driving one of the first and second modulators was inverted or in phase otherwise,
wherein the combined optical output is a duobinary NRZ format such that consecutive logical "1"s have the same phase.

12. A method according to claim 6 or claim 7, comprising the steps of:
driving the first and second optical modulators by NRZ data;
applying a delay of between 0 bits and 1 bit to the data driving one of the first and second optical modulators; and,
phase biasing the output of one of the first and second optical modulators to be either in phase with the other of the first and second light signals if the logical polarity of the data driving one of the first and second modulators was inverted or in anti-phase phase otherwise,
wherein the combined optical output is a duobinary NRZ format such that consecutive logical "1"s have opposite phase.

13. A method according to claim 6, comprising the steps of:
driving the first and second optical modulators by NRZ data;
applying no delay to the data driving either the first or second optical modulators; and
phase biasing the output of one of the first and second optical modulators to be in anti-phase with the other of the first and second light signals,
wherein the combined optical output is a double side band suppressed carrier (differentially phase-shift keyed) format.

14. An optical transmitter for transmitting optically encoded data comprising a coherent light source and a modulator structure, the modulator structure including:
an optimal splitter coupled to the coherent light source for splitting light from the coherent light source into first and second light signals;
a first optical intensity modulator for modulating the first light signal with binary data;
a second optical intensity modulator for modulating the second light signal with binary data;
means for phase biasing the output of one of the first and second optical modulators to be either in phase or in anti-phase with the output of the other of the first and second optical modulators, such that the combined optical output gives rise to a maximum optical extinction ratio; and,
a coupler for coupling the output from the first optical intensity modulator and the output from the second optical intensity modulator;
wherein the first and second optical intensity modulators are adapted to be driven at points of maximum optical transmission.

15. An optical transmitter according to claim 14, wherein the first and second optical intensity modulators are electro-optic modulators.

16. An optical transmitter according to claim 15, wherein the first and second modulators are Mach-Zehnder modulators.

17. An optical transmitter according to any one of claims 14 to 16, wherein the transmitter is integrated onto a single substrate.

18. An optical transmitter according to any one of claims 14 to 17, wherein the transmitter further includes either electrical RZ or NRZ drivers connected to each of the first and second optical modulators.

19. An optical transmitter according to any one of claims 14 to 18, wherein the transmitter further includes means to apply a delay to the data driving one of the first and second optical modulators.

20. An optical transmitter according to claim 19, wherein the magnitude of the delay applied to the data driving one of the first and second optical modulators can be any one of: 0 bits; 1 bit; or, any value between 0 bits and 1 bit.

21. An optical transmitter according to any one of claims 14 to 20, wherein the transmitter further includes means to invert the logical polarity of the data driving at least one of the first and second optical modulators.

22. An optical transmitter according to claim 21, comprising:
electrical RZ drivers connected to each of the first and second optical modulators;
means to apply a delay of 1 bit to the data driving one of the first and second optical modulators; and,
means for phase biasing the output of one of the first and optical modulators to be in anti-phase with the output of the other of the first and second optical modulators,
wherein the combined optical output is a duobinary RZ format in which consecutive logical "1"s have the same phase.

23. An optical transmitter according to claim 20, comprising:
electrical RZ drivers connected to each of the first and second optical modulators;
means to apply a delay of 1 bit to the data driving one of the first and second optical modulators; and,
means for phase biasing the output of one of the first and optical modulators to be in anti-phase with the output of the other of the first and second optical modulators,
wherein the combined optical output is a duobinary RZ format in which consecutive logical "1"s have opposite phase.

24. An optical transmitter according to claim 21, comprising:
electrical RZ drivers connected to each of the first and second optical modulators;
means to apply a delay of 0 bits to the data driving either the first and second optical modulators; and,
means for phase biasing the output of one of the first and optical modulators to be in anti-phase with the output of the other of the first and second optical modulators,
wherein the combined optical output is a differentially phase-shift keyed RZ format.

25. An optical transmitter according to claim 20 or claim 21, comprising:
electrical NRZ drivers connected to each of the first and second optical modulators;
means to apply a delay of between 0 bits and 1 bit to the data driving one of the first and second optical modulators; and,
means for phase biasing the output of one of the first and second optical modulators to be either in anti-phase with the other of the first and second light signals if the logical polarity of the data driving one of the first and second modulators was inverted, or in phase otherwise,
wherein the combined optical output is a duobinary NRZ format in which consecutive logical "1"s have the same phase.

26. An optical transmitter according to claim 20 or claim 21, comprising:
electrical NRZ drivers connected to each of the first and second optical modulators;
means to apply a delay of between 0 bits and 1 bit to the data driving one of the first and second optical modulators; and,
means for phase biasing the output of one of the first and second optical modulators to be either in phase with the other of the first and second light signals if the logical polarity of the data driving one of the first and second modulators was inverted, or in anti-phase otherwise,
wherein the combined optical output is a duobinary NRZ format in which consecutive logical "1"s have opposite phase.

27. An optical transmitter according to claim 20 or claim 21, comprising:
electrical NRZ drivers connected to each of the first and second optical modulators;
means to apply a delay of 0 bits to the data driving one of the first and second optical modulators; and,
means for phase biasing the output of one of the first and optical modulators to be in anti-phase with the output of the other of the first and second optical modulators,
wherein the combined optical output is a double side band suppressed carrier (differentially phase-shift keyed) format.

## Patentansprüche

1. Verfahren zum optischen Codieren von binären Daten, umfassend die Schritte:
Aufteilen von Licht einer kohärenten Lichtquelle in ein erstes und ein zweites Lichtsignal;
Modulieren des ersten Lichtsignals mit den binären Daten unter Verwendung eines ersten optischen Intensitätsmodulators;
Modulieren des zweiten Lichtsignals mit den binären Daten unter Verwendung eines zweiten optischen Intensitätsmodulators; und
Koppeln der Lichtausgabe von dem ersten und dem zweiten optischen Intensitätsmodulator, um eine kombinierte optische Ausgabe zu erhalten,
wobei der erste und der zweite optische Intensitätsmodulator an Punkten maximaler optischer Transmission betrieben werden, und
wobei die Ausgabe des ersten oder des zweiten optischen Modulators phasenverschoben ist, um entweder in Phase oder in Antiphase mit der Ausgabe des anderen ersten oder zweiten optischen Modulators zu sein, so dass die kombinierte optische Ausgabe ein maximales optisches Extinktionsverhältnis zur Folge hat.

2. Verfahren nach einem der vorhergehenden Ansprüche, bei welchem der erste und der zweite Modulator elektrooptische Modulatoren sind.

3. Verfahren nach Anspruch 2, bei welchem der erste und der zweite Modulator Mach-Zehnder-Modulatoren sind.

4. Verfahren nach einem der vorhergehenden Ansprüche, bei welchem der erste und der zweite optische Modulator mit RZ oder NRZ-Daten betrieben werden.

5. Verfahren nach einem der vorhergehenden Ansprüche, bei welchem eine Verzögerung auf Daten angewendet wird, die den ersten oder den zweiten optischen Modulator betreiben.

6. Verfahren nach Anspruch 5, bei welchem die Größe der Verzögerung, die auf den ersten oder den zweiten Modulator angewendet wird, eine der folgenden ist: 0 Bit, 1 Bit; oder irgendein Wert zwischen 0 und 1 Bit.

7. Verfahren nach einem der vorhergehenden Ansprüche, bei welchem die logische Polarität der Daten, die den ersten oder den zweiten Modulator betreiben, invertiert ist.

8. Verfahren nach Anspruch 7, umfassend die Schritte:
Betreiben des ersten und des zweiten optischen Modulators mit RZ-Daten;
Anwenden einer Verzögerung von 1 Bit auf die Daten, die den ersten und den zweiten optischen Modulator betreiben; und
Phasenverschieben der Ausgabe des ersten oder des zweiten optischen Modulators, um in Antiphase mit dem anderen ersten oder zweiten Lichtsignal zu sein,
wobei die kombinierte optische Ausgabe ein duobinäres RZ-Format ist, bei welchem aufeinanderfolgende logische "1"en dieselbe Phase haben.

9. Verfahren nach Anspruch 6, umfassend die Schritte:
Betreiben des ersten und des zweiten optischen Modulators mit RZ-Daten;
Anwenden einer Verzögerung von 1 Bit auf die Daten, die den ersten und den zweiten optischen Modulator betreiben; und
Phasenverschieben der Ausgabe des ersten oder des zweiten optischen Modulators, um in Antiphase mit dem anderen ersten oder zweiten Lichtsignal zu sein,
wobei die kombinierte optische Ausgabe ein duobinäres RZ-Format ist, bei welchem aufeinanderfolgende logische "1"en entgegengesetzte Phase haben.

10. Verfahren nach Anspruch 7, umfassend die Schritte:
Betreiben des ersten und des zweiten optischen Modulators mit RZ-Daten;
Anwenden von keiner Verzögerung auf die Daten, die sowohl den ersten als auch den zweiten optischen Modulator betreiben; und
Phasenverschieben der Ausgabe des ersten oder des zweiten optischen Modulators, um in Antiphase mit dem anderen ersten oder zweiten Lichtsignal zu sein,
wobei die kombinierte optische Ausgabe ein differentiell phasenverschobenes verschlüsseltes Format ist.

11. Verfahren nach Anspruch 6 oder 7, umfassend die Schritte:
Betreiben des ersten und des zweiten optischen Modulators mit NRZ-Daten;
Anwenden einer Verzögerung zwischen 0 Bit und 1 Bit auf die Daten, die den ersten und den zweiten optischen Modulator betreiben; und
Phasenverschieben der Ausgabe des ersten oder des zweiten optischen Modulators, um entweder in Antiphase mit dem anderen ersten oder zweiten Lichtsignal zu sein, wenn die logische Polarität der Daten, die den ersten oder den zweiten Modulator betreiben, invertiert war, oder um ansonsten in Phase zu sein,
wobei die kombinierte optische Ausgabe ein duobinäres NRZ-Format ist, so dass aufeinanderfolgende logische "1"en dieselbe Phase haben.

12. Verfahren nach Anspruch 6 oder 7, umfassend die Schritte:
Betreiben des ersten und des zweiten optischen Modulators mit NRZ-Daten;
Anwenden einer Verzögerung zwischen 0 Bit und 1 Bit auf die Daten, die den ersten oder den zweiten optischen Modulator betreiben; und
Phasenverschieben der Ausgabe des ersten oder des zweiten optischen Modulators, um entweder in Phase mit dem anderen ersten oder zweiten Lichtsignal zu sein, wenn die logische Polarität der Daten, die den ersten oder den zweiten Modulator betreiben, invertiert war, oder um ansonsten in Antiphase zu sein,
wobei die kombinierte optische Ausgabe ein duobinäres NRZ-Format ist, so dass aufeinanderfolgende logische "1"en entgegengesetzte Phase haben.

13. Verfahren nach Anspruch 6, umfassend die Schritte:
Betreiben des ersten und des zweiten optischen Modulators mit NRZ-Daten;
Anwenden von keiner Verzögerung auf die Daten, die entweder den ersten oder den zweiten optischen Modulator betreiben; und
Phasenverschieben der Ausgabe des ersten oder des zweiten optischen Modulators, um in Antiphase mit dem anderen ersten oder zweiten Lichtsignal zu sein,
wobei die kombinierte optische Ausgabe ein Doppelseitenband-unterdrücktes Träger (differenziell phasenverschobenes verschlüsseltes) Format ist.

14. Optische Überträger zum Übertragen optisch codierter Daten, umfassend eine kohärente Lichtquelle und eine Modulatorstruktur, wobei die Modulatorstruktur aufweist:
einen optischen Splitter, der mit der kohärenten Lichtquelle zum Aufteilen des Lichtes von der kohärenten Lichtquelle in ein erstes und zweites Lichtsignal gekoppelt ist;
ein erster optischer Intensitätsmodulator zur Modulation des ersten Lichtsignals mit binären Daten;
ein zweiter optischer Intensitätsmodulator zur Modulation des zweiten Lichtsignals mit binären Daten;
ein Mittel zum Phasenverschieben der Ausgabe des ersten oder des zweiten optischen Modulators, um entweder in Phase oder in Antiphase mit der Ausgabe des anderen ersten oder zweiten optischen Modulators zu sein, so dass die kombinierte optische Ausgabe zu einem maximalen optischen Extinktionsverhältnis führt; und
ein Koppler zum Koppeln der Ausgabe von dem ersten optischen Intensitätsmodulator mit der Ausgabe von dem zweiten optischen Intensitätsmodulator;
wobei der erste und der zweiten optische Intensitätsmodulator eingerichtet sind, um an Punkten maximaler optischer Übertragung betrieben zu werden.

15. Optischer Überträger nach Anspruch 14, bei welchem der erste und der zweite optische Intensitätsmodulator elektrooptische Modulatoren sind.

16. Optischer Überträger nach Anspruch 15, bei welchem der erste und der zweite Modulator Mach-Zehnder-Modulatoren sind.

17. Optischer Überträger nach einem der Ansprüche 14 bis 16, bei welchem der Überträger auf einem einzigen Substrat integriert ist.

18. Optischer Überträger nach einem der Ansprüche 14 bis 17, bei welchem der Überträger weiter entweder elektrische RZ- oder NRZ-Treiber aufweist, die jeweils mit dem ersten und dem zweiten optischen Modulator verbunden sind.

19. Optischer Überträger nach einem der Ansprüche 14 bis 18, bei welchem der Überträger weiter ein Mittel zum Anwenden einer Verzögerung auf die Daten aufweist, die den ersten und den zweiten optischen Modulator betreiben.

20. Optischer Überträger nach Anspruch 19, bei welchem die Größe der Verzögerung, die auf die Daten angewendetwird, die den ersten und den zweiten optischen Modulator betreiben, eine der folgenden sein kann: 0 Bit; 1 Bit oder irgendein Wert zwischen 0 Bit und 1 Bit.

21. Optischer Überträger nach einem der Ansprüche 14 bis 20, wobei der Überträger weiter ein Mittel zum Invertieren der logischen Polarität der Daten aufweist, die wenigstens den ersten oder den zweiten optischen Modulator betreiben.

22. Optischer Überträger nach Anspruch 21, umfassend:
elektrische RZ-Treiber, die jeweils dem ersten und zweiten Modulator verbunden sind;
ein Mittel zum Anwenden einer Verzögerung von 1 Bit auf die Daten, die den ersten und den zweiten optischen Modulator betreiben; und
ein Mittel zur Phasenverschiebung der Ausgabe des ersten oder des zweiten optischen Modulators, um in Antiphase mit der Ausgabe des anderen ersten oder zweiten optischen Modulators zu sein,
wobei die kombinierte optische Ausgabe ein duobinäres RZ-Format ist, bei welchem aufeinanderfolgende logische "1"en dieselbe Phase haben.

23. Optischer Überträger nach Anspruch 20, umfassend:
elektrische RZ-Treiber, die jeweils mit dem ersten und zweiten optischen Modulator verbunden sind;
ein Mittel zum Anwenden einer Verzögerung von 1 Bit auf die Daten, die den ersten und den zweiten optischen Modulator betreiben; und
ein Mittel zur Phasenverschiebung der Ausgabe des ersten oder des zweiten optischen Modulators, um in Antiphase mit der Ausgabe des anderen ersten oder zweiten optischen Modulators zu sein,
wobei die kombinierte optische Ausgabe ein duobinäres RZ-Format ist, bei welchem aufeinanderfolgende " 1 "en entgegengesetzte Phase haben.

24. Optischer Überträger nach Anspruch 21, umfassend:
elektrische RZ-Treiber, die jeweils mit dem ersten und dem zweiten optischen Modulator verbunden sind;
ein Mittel zum Anwenden einer Verzögerung von 0 Bit auf die Daten, die sowohl den ersten als auch den zweiten optischen Modulator betreiben; und
ein Mittel zur Phasenverschiebung der Ausgabe des ersten oder des zweiten optischen Modulators, um in Antiphase mit der Ausgabe des anderen ersten oder zweiten optischen Modulators zu sein,
wobei die kombinierte optische Ausgabe ein differentiell phasenverschobenes verschlüsseltes RZ-Format ist.

25. Optischer Überträger nach Anspruch 20 oder Anspruch 21, umfassend:
elektrische NRZ-Treiber, die jeweils mit dem ersten und dem zweiten optischen Modulator verbunden sind;
ein Mittel zum Anwenden einer Verzögerung zwischen 0 Bit und 1 Bit auf die Daten, die den ersten oder den zweiten optischen Modulator betreiben; und
ein Mittel zur Phasenverschiebung der Ausgabe des ersten oder des zweiten optischen Modulators, um entweder in Antiphase mit dem anderen ersten oder zweiten Lichtsignal zu sein, wenn die logische Polarität der Daten, die den ersten und den zweiten Modulator betreiben, invertiert war oder um ansonsten in Antiphase zu sein,
wobei die kombinierte optische Ausgabe ein duobinäres NRZ-Format ist, bei welchem aufeinanderfolgende logische "1"en dieselbe Phase haben.

26. Optischer Überträger nach Anspruch 20 oder Anspruch 21, umfassend:
elektrische NRZ-Treiber, die jeweils mit dem ersten und dem zweiten optischen Modulator verbunden sind;
ein Mittel zum Anwenden einer Verzögerung zwischen 0 Bit und 1 Bit auf die Daten, die den ersten oder den zweiten optischen Modulator betreiben; und
ein Mittel zur Phasenverschiebung der Ausgabe des ersten oder des zweiten optischen Modulators, um entweder in Phase mit dem anderen ersten oder zweiten Lichtsignal zu sein, wenn die logische Polarität der Daten, die den ersten oder den zweiten Modulator betreiben, invertiert war, oder um ansonsten in Antiphase zu sein,
wobei die kombinierte optische Ausgabe ein duobinäres NRZ-Format ist, bei welchem aufeinanderfolgende logische "1"en entgegengesetzte Phase haben.

27. Optischer Überträger nach Anspruch 20 oder Anspruch 21, umfassend:
elektrische NRZ-Treiber, die jeweils mit dem ersten und dem zweiten optischen Modulator verbunden sind;
ein Mittel zum Anwenden einer Verzögerung von 0 Bit auf die Daten, die den ersten oder den zweiten optischen Modulator betreiben; und
ein Mittel zur Phasenverschiebung der Ausgabe des ersten oder des zweiten optischen Modulators, um in Antiphase mit der Ausgabe des anderen ersten oder zweiten optischen Modulators zu sein,
wobei die kombinierte optische Ausgabe ein Doppelseitenband-unterdrücktes Träger (differentiell phasenverschobenes verschlüsseltes) Format ist.

## Revendications

1. Procédé pour coder optiquement des données binaires, comprenant les étapes consistant à :
diviser la lumière provenant d'une source de lumière cohérente en premier et second signaux de lumière;
moduler le premier signal de lumière avec les données binaires en utilisant un premier modulateur d'intensité optique ;
moduler le second signal de lumière avec les données binaires en utilisant un second modulateur d'intensité optique ; et
coupler la lumière fournie en sortie par les premier et second modulateurs d'intensité optique pour obtenir une sortie optique combinée,
dans lequel les premier et second modulateurs d'intensité optique sont pilotés aux points de transmission optique maximale,
et dans lequel la sortie de l'un des premier et second modulateurs optiques est décalée en phase pour être en phase ou en antiphase avec la sortie de l'autre des premier et second modulateurs optiques, de telle sorte que la sortie optique combinée donne lieu à un rapport d'atténuation optique maximal.

2. Procédé selon la revendication précédente, dans lequel les premier et second modulateurs sont des modulateurs électrooptiques.

3. Procédé selon la revendication 2, dans lequel les premier et second modulateurs sont des modulateurs de Mach-Zehnder.

4. Procédé selon l'une quelconque des revendications précédentes, dans lequel les premier et second modulateurs optiques sont pilotés avec des données RZ ou NRZ.

5. Procédé selon l'une quelconque des revendications précédentes, dans lequel un retard est appliqué aux données pilotant l'un des premier et second modulateurs optiques.

6. Procédé selon la revendication 5, dans lequel la grandeur du retard appliqué à l'un des premier et second modulateurs est l'une quelconque parmi : des bits 0 ; un bit 1 ; ou toute valeur entre des bits 0 et 1.

7. Procédé selon l'une quelconque des revendications précédentes, dans lequel la polarité logique des données pilotant l'un des premier et second modulateurs est inversée.

8. Procédé selon la revendication 7, comprenant les étapes consistant à :
piloter les premier et second modulateurs optiques avec des données RZ;
appliquer un retard d'un bit 1 aux données pilotant l'un des premier et second modulateurs optiques ; et
décaler en phase la sortie de l'un des premier et second modulateurs optiques pour qu'elle soit en antiphase avec l'autre des premier et second signaux de lumière,
dans lequel la sortie optique combinée est un format RZ duobinaire dans lequel les « 1 » logiques consécutifs ont la même phase.

9. Procédé selon la revendication 6, comprenant les étapes consistant à :
piloter les premier et second modulateurs optiques par des données RZ;
appliquer un retard d'un bit 1 aux données pilotant l'un des premier et second modulateurs optiques ; et
décaler en phase la sortie de l'un des premier et second modulateurs optiques pour qu'elle soit en antiphase avec l'autre des premier et second signaux de lumière,
dans lequel la sortie optique combinée est un format RZ duobinaire dans lequel les « 1 » logiques consécutifs ont une phase opposée.

10. Procédé selon la revendication 7, comprenant les étapes consistant à :
piloter les premier et second modulateurs optiques par des données RZ;
n'appliquer aucun retard aux données pilotant l'un ou l'autre des premier et second modulateurs optiques ; et
décaler en phase la sortie de l'un des premier et second modulateurs optiques pour qu'elle soit en antiphase avec l'autre des premier et second signaux de lumière,
dans lequel la sortie optique combinée est un format verrouillé différentiellement en déphasage.

11. Procédé selon la revendication 6 ou la revendication 7, comprenant les étapes consistant à :
piloter les premier et second modulateurs optiques par des données NRZ;
appliquer un retard compris entre des bits 0 et un bit 1 aux données pilotant l'un des premier et second modulateurs optiques ; et
décaler en phase la sortie de l'un des premier et second modulateurs optiques pour qu'elle soit, soit en antiphase avec l'autre des premier et second signaux de lumière si la polarité logique des données pilotant l'un des premier et second modulateurs était inversée, soit en phase dans le cas contraire,
dans lequel la sortie optique combinée est un format NRZ duobinaire tel que des « 1 » logiques consécutifs ont la même phase.

12. Procédé selon la revendication 6 ou la revendication 7, comprenant les étapes consistant à :
piloter les premier et second modulateurs optiques par des données NRZ;
appliquer un retard compris entre des bits 0 et un bit 1 aux données pilotant l'un des premier et second modulateurs optiques ; et
décaler en phase la sortie de l'un des premier et second modulateurs optiques pour qu'elle soit, soit en phase avec l'autre des premier et second signaux de lumière si la polarité logique des données pilotant l'un des premier et second modulateurs était inversée, soit en antiphase dans le cas contraire,
dans lequel la sortie optique combinée est un format NRZ duobinaire tel que les « 1 » logiques consécutifs ont une phase opposée.

13. Procédé selon la revendication 6, comprenant les étapes consistant à :
piloter les premier et second modulateurs optiques par des données NRZ;
n'appliquer aucun retard aux données pilotant soit le premier soit le second modulateurs optiques ; et
décaler en phase la sortie de l'un des premier et second modulateurs optiques pour qu'elle soit en antiphase avec l'autre des premier et second signaux de lumière,
dans lequel la sortie optique combinée est un format à double bande latérale avec onde porteuse supprimée (verrouillé différentiellement en déphasage).

14. Emetteur optique pour transmission de données codées optiquement comprenant une source de lumière cohérente et une structure de modulateur, la structure de modulateur comprenant :
un diviseur optique couplé à la source de lumière cohérente pour diviser la lumière provenant de la source de lumière cohérente en des premier et second signal de lumière ;
un premier modulateur d'intensité optique pour moduler le premier signal de lumière avec des données binaires ;
un second modulateur d'intensité optique pour moduler le second signal de lumière avec des données binaires ;
un moyen pour décaler en phase la sortie de l'un des premier et second modulateurs optiques pour qu'elle soit en phase ou bien en antiphase avec la sortie de l'autre des premier et second modulateurs optiques, de telle sorte que la sortie optique combinée donne lieu à un rapport d'atténuation optique maximal ; et
un coupleur pour coupler la sortie en provenance du premier modulateur d'intensité optique et la sortie en provenance du second modulateur d'intensité optique ;
dans lequel les premier et second modulateurs d'intensité optiques sont adaptés pour être pilotés aux points de transmission optique maximale.

15. Emetteur optique selon la revendication 14, dans lequel les premier et second modulateurs d'intensité optiques sont des modulateurs électrooptiques.

16. Emetteur optique selon la revendication 15, dans lequel les premier et second modulateurs sont des modulateurs de Mach-Zehnder.

17. Emetteur optique selon l'une quelconque des revendications 14 à 16, dans lequel l'émetteur est intégré sur un substrat unique.

18. Emetteur optique selon l'une quelconque des revendications 14 à 17, dans lequel l'émetteur comprend en outre des pilotes électriques soit RZ, soit NRZ connectés à chacun des premier et second modulateurs optiques.

19. Emetteur optique selon l'une quelconque des revendications 14 à 18, dans lequel l'émetteur comprend en outre un moyen pour appliquer un retard aux données pilotant l'un des premier et second modulateurs optiques.

20. Emetteur optique selon la revendication 19, dans lequel la grandeur du retard appliqué aux données pilotant l'un des premier et second modulateurs optiques peut être l'une quelconque parmi : des bits 0 ; un bit 1 ; ou toute valeur entre des bits 0 et un bit 1.

21. Emetteur optique selon l'une quelconque des revendications 14 à 20, dans lequel l'émetteur comprend en outre un moyen pour inverser la polarité logique des données pilotant au moins l'un des premier et second modulateurs optiques.

22. Emetteur optique selon la revendication 21, comprenant :
des pilotes électriques RZ connectés à chacun des premier et second modulateurs optiques;
un moyen pour appliquer un retard d'un bit 1 aux données pilotant l'un des premier et second modulateurs optiques ; et
un moyen pour décaler en phase la sortie de l'un des premier et second modulateurs optiques pour qu'elle soit en antiphase avec la sortie de l'autre des premier et second modulateurs optiques,
dans lequel la sortie optique combinée est un format RZ duobinaire dans lequel les « 1 » logiques consécutifs ont la même phase.

23. Emetteur optique selon la revendication 20, comprenant :
des pilotes électriques RZ connectés à chacun des premier et second modulateurs optiques ;
un moyen pour appliquer un retard d'un bit 1 aux données pilotant l'un des premier et second modulateurs optiques ; et
un moyen pour décaler en phase la sortie de l'un des premier et second modulateurs optiques pour qu'elle soit en antiphase avec la sortie de l'autre des premier et second modulateurs optiques,
dans lequel la sortie optique combinée est un format RZ duobinaire dans lequel les « 1 » logiques consécutifs ont une phase opposée.

24. Emetteur optique selon la revendication 21, comprenant :
des pilotes électriques RZ connectés à chacun des premier et second modulateurs optiques ;
un moyen pour appliquer un retard de bits 0 aux données pilotant l'un ou l'autre des premier et second modulateurs optiques ; et
un moyen pour décaler en phase la sortie de l'un des premier et second modulateurs optiques pour qu'elle soit en antiphase avec la sortie de l'autre des premier et second modulateurs optiques,
dans lequel la sortie optique combinée est un format RZ verrouillé différentiellement en déphasage.

25. Emetteur optique selon la revendication 20 ou la revendication 21, comprenant :
des pilotes électriques NRZ connectés à chacun des premier et second modulateurs optiques ;
un moyen pour appliquer un retard compris entre des bits 0 et un bit 1 aux données pilotant l'un des premier et second modulateurs optiques ; et
un moyen pour décaler en phase la sortie de l'un des premier et second modulateurs optiques pour qu'elle soit, soit en antiphase avec l'autre des premier et second signaux de lumière si la polarité logique des données pilotant l'un des premier et second modulateurs était inversée, soit en phase dans le cas contraire,
dans lequel la sortie optique combinée est un format NRZ duobinaire dans lequel les « 1 » logiques consécutifs ont la même phase.

26. Emetteur optique selon la revendication 20 ou la revendication 21, comprenant :
des pilotes électriques NRZ connectés à chacun des premier et second modulateurs optiques ;
un moyen pour appliquer un retard compris entre des bits 0 et un bit 1 aux données pilotant l'un des premier et second modulateurs optiques ; et
un moyen pour décaler en phase la sortie de l'un des premier et second modulateurs optiques pour qu'elle soit, soit en phase l'autre des premier et second signaux de lumière si la polarité logique des données pilotant l'un des premier et second modulateurs était inversée, soit en antiphase dans le cas contraire,
dans lequel la sortie optique combinée est un format NRZ duobinaire dans lequel les « 1 » logiques consécutifs ont une phase opposée.

27. Emetteur optique selon la revendication 20 ou la revendication 21, comprenant :
des pilotes électriques NRZ connectés à chacun des premier et second modulateurs optiques ;
un moyen pour appliquer un retard de bits 0 aux données pilotant l'un des premier et second modulateurs optiques ; et
un moyen pour décaler en phase la sortie de l'un des premier et second modulateurs optiques pour qu'elle soit en antiphase avec la sortie de l'autre des premier et second modulateurs optiques,
dans lequel la sortie optique combinée est un format à double bande latérale avec onde porteuse supprimée (verrouillé différentiellement en déphasage).
